# EUROPEAN PATENT SPECIFICATION

(11) **EP 3 650 679 B1**
(45) Date of publication and mention of the grant of the patent: **08.03.2023**
(21) Application number: 18827703.2
(22) Date of filing: 19.06.2018
(51) Int. Cl.: F02F 1/42, F02B 31/04, F02M 35/10, F02M 35/108, F02B 31/06, F02B 31/08, F02F 1/24

(54) **AIR INTAKE STRUCTURE FOR INTERNAL COMBUSTION ENGINE**
LUFTANSAUGSTRUKTUR FÜR BRENNKRAFTMASCHINE
STRUCTURE D'ADMISSION D'AIR DESTINÉE À UN MOTEUR À COMBUSTION INTERNE

(30) Priority: 05.07.2017 JP 2017132018
(43) Date of publication of application: 13.05.2020
(73) Proprietor: Honda Motor Co., Ltd., Tokyo 107-8556 (JP)
(72) Inventor: NAKAMURA, Yohei, Wako-shi Saitama 351-0193 (JP); KOSEI, Kazuyuki, Wako-shi Saitama 351-0193 (JP)
(74) Representative: Kiwit, Benedikt
(86) International application number: PCT/JP2018/023238
(87) International publication number: WO 2019/009061

(56) References cited:
- EP-A1- 3 428 433
- EP-A1- 3 594 471
- JP-A- H11 210 479
- JP-A- 2012 180 799
- JP-A- 2016 070 206
- JP-A- 2017 053 230
- US-A1- 2002 124 829

## Description

### [Technical Field]

The present invention relates to an air intake structure for an internal combustion engine, and more particularly to a partition of an air intake passageway for an internal combustion engine.

### [Background Art]

JP 2016-183639 A (FIGS. 1, 2, 4, and 5) described below, for example, illustrates an air intake structure in an internal combustion engine in which a partition plate is disposed in an intake passageway of a cylinder head, i.e., an intake port, dividing the intake port into a tumble flow passage and a main flow passage, the partition plate being straight from an upstream side to a downstream side with respect to an intake flow.

For producing a tumbling flow in a combustion chamber, it is preferable to guide an intake flow from the tumble flow passage into a region between a rear surface of the head of an intake valve close to an exhaust valve and a ceiling surface of the combustion chamber. To this end, the air intake structure disclosed in Patent Document 1 has the exit of the tumble flow passage directed toward the ceiling surface of the combustion chamber.

According to the air intake structure disclosed in Patent Document 1, the partition plate is of a straight shape, which imposes a limitation on the layout of the passage shape and layout of the tumble flow passage and the main flow passage in the cylinder head.

An air intake structure with the features of appended claim 1's preamble is disclosed in JP 2016-70206 A. A document according to Article 54(3) EPC is disclosed in EP 3 594 471 A1.

### [Summary of the Invention]

### [Underlying Problem to be solved by the Invention]

The present invention has been made in view of the above related art. It is an object of the present invention to provide an air intake structure for an internal combustion engine which increases the degree of freedom of the passage shape and layout of a tumble flow passage and a main flow passage for intensifying a tumbling flow in a combustion chamber.

### [Means to solve the Underlying Problem]

To solve the above problem, there is provided in accordance with the present invention an air intake structure for an internal combustion engine including a cylinder head coupled to a cylinder block and having an intake passageway defined therein, the intake passageway housing a partition disposed along an intake flow direction and being divided by the partition into a tumble flow passage and a main flow passage, in which
the partition in the cylinder head has a downstream end curved toward the cylinder block, the tumble flow passage has a downstream end oriented toward a ceiling surface of a combustion chamber of the internal combustion engine, and the tumble flow passage in the cylinder head includes a first curved portion that is curved concavely toward a cylinder block along a cylinder axis of the cylinder block and a second curved portion that is curved convexly toward the cylinder block.

With the above air intake structure for the internal combustion engine, as the downstream end of the partition in the cylinder head is curved toward the cylinder block, and the tumble flow passage in the cylinder head has two curved portions that are curved in opposite directions to each other, the degree of freedom of the passage shape and layout of the tumble flow passage in the cylinder head is increased. The downstream end of the tumble flow passage can be oriented toward the ceiling surface of the combustion chamber without largely changing the cross-sectional areas of the tumble flow passage and the main flow passage, for intensifying a tumbling flow in the combustion chamber with intake air from the tumble flow passage.

In the above air intake structure for the internal combustion engine, the partition in the cylinder head may have a thickness that varies from an upstream side toward a downstream side along the intake flow direction.

With this arrangement, even though the tumble flow passage in the cylinder head has a plurality of curved portions, it is easy to adjust the cross-sectional areas of the tumble flow passage and the main flow passage in the cylinder head by varying the thickness of the partition in the cylinder head, so that the degree of freedom of the passage shape and layout of the tumble flow passage is increased.

In the above air intake structure for the internal combustion engine, the cylinder head may include a joint surface to which an inlet pipe for an intake air is connected, at an upstream end of an intake port in the cylinder head, the intake passageway being perpendicular to the joint surface at a region of the joint surface.

With this arrangement, since the intake passageway is perpendicular to the joint surface at a region of the joint surface where the intake port in the cylinder head and the inlet pipe are connected to each other, the inlet pipe can easily be mounted on the cylinder head.

In the above air intake structure for the internal combustion engine, the internal combustion engine may include an internal combustion engine mounted on a vehicle with the cylinder axis forwardly inclined nearly horizontally, the inlet pipe may be curved and extend rearwardly with respect to the vehicle from a joint portion thereof connected to the cylinder head, the inlet pipe may have an intake passageway defined therein that is divided by the partition disposed along the intake flow direction into a tumble flow passage and a main flow passage, and the partition in the inlet pipe may have a thickness that varies from an upstream side toward a downstream side along the intake flow direction.

With this arrangement, even though the inlet pipe is curved and extends rearwardly with respect to the vehicle from the joint portion connected to the cylinder head, and the intake passageway is curved, it is easy to adjust the cross-sectional areas of the tumble flow passage and the main flow passage in the inlet pipe by varying the thickness of the partition in the inlet pipe, so that the degree of freedom of the passage shape and layout of the tumble flow passage is increased.

In the above air intake structure for the internal combustion engine, an insulator may be interposed between the cylinder head and the inlet pipe, the cylinder head, the inlet pipe, and the insulator may have respective flanges, the inlet pipe may be fastened and joined to the cylinder head by fastening members threaded into thread-in portions of the flanges. The first curved portion of the tumble flow passage in the cylinder head is be disposed upstream of the second curved portion with respect to the intake flow direction and downstream of the joint surface of the cylinder head to which the inlet pipe is connected, and the first curved portion has a radius of curvature that is smaller than a radius of curvature of the second curved portion.

With this arrangement, since the first curved portion whose radius of curvature is smaller is disposed downstream of the joint surface of the cylinder head to which the inlet pipe is connected, the tumble flow passage at the joint surface can be disposed closely to the main flow passage. The layout of the tumble flow passage and the main flow passage is thus made compact, allowing the flanges small in size.

Specifically, in the air intake structure in which the inlet pipe extends rearwardly with respect to the vehicle, in case the downstream end of the tumble flow passage in the cylinder head is oriented toward the ceiling surface of the combustion chamber for producing a tumbling flow, the tumble flow passage at the joint surface of the cylinder head to which the inlet pipe is connected tends to be positioned closely to the cylinder block side along the cylinder axis, making it necessary to enlarge a joint surface. Thus, the structure of the joint surface is liable to be complex, and it is necessary to increase the number of fastening members. As a result, the number of parts used tends to be increased.

However, inasmuch as the radius of curvature of the upstream first curved portion is smaller than the radius of curvature of the second curved portion, the tumble flow passage at the joint surface can be disposed closely to the main flow passage. As the second curved portion is connected to the first curved portion downstream thereof, the downstream end of the tumble flow passage is oriented toward the ceiling surface of the combustion chamber for intensifying the tumbling flow. In addition, the joint surface can be reduced in size. The structure is prevented from becoming complex, and the number of parts used is prevented from being increased.

In the above air intake structure for the internal combustion engine, the tumble flow passage in the cylinder head may include a plurality of curved portions having different curvatures, defined by an inner wall of the cylinder block.

With this arrangement, as the tumble flow passage in the cylinder head includes the plurality of curved portions having different curvatures, defined by the inner wall of the cylinder head, the degree of freedom of the passage shape of the tumble flow passage is increased.

In the above air intake structure for the internal combustion engine, the downstream end of the tumble flow passage in the cylinder head may be defined by an edge flow passage wall having an edge oriented toward the ceiling surface of the combustion chamber, and the downstream end of the tumble flow passage may be open into the main flow passage in the intake port so that intake air guided by the downstream end joins intake air guided by the main flow passage in the intake port.

With this arrangement, intake air is prevented from spreading over the entire rear surface of the valve head of an intake valve because intake air would tend to spread so if the opening of the downstream end of the tumble flow passage were enlarged. Rather, intake air is intensely guided from the tumble flow passage into a space between the rear surface of the valve head of the intake valve closer to an exhaust valve and the ceiling surface of the combustion chamber, thereby intensifying the tumbling flow in the combustion chamber.

### [Advantageous Effects of the Invention]

In accordance with the air Intake structure for Internal Combustion Engine of the present invention, with the air intake structure for the internal combustion engine, as the downstream end of the partition in the cylinder head is curved toward the cylinder block, and the tumble flow passage in the cylinder head has two curved portions that are curved in opposite directions to each other, the degree of freedom of the passage shape and layout of the tumble flow passage in the cylinder head is increased. The downstream end of the tumble flow passage can be oriented toward the ceiling surface of the combustion chamber without largely changing the cross-sectional areas of the tumble flow passage and the main flow passage, for intensifying a tumbling flow in the combustion chamber with intake air from the tumble flow passage.

### [Brief Description of Drawings]

FIG. 1 is a right-hand side elevational view of a motorcycle having a power unit that incorporates an air intake structure for an internal combustion engine according to Embodiment 1 of the present invention.
FIG. 2 is a right-hand side elevational view of the rear part of the motorcycle illustrated in FIG. 1, with a vehicle body cover removed.
FIG. 3 is a sectional side elevational view of the power unit illustrated in FIG. 2, as viewed in substantially the same orientation as FIG. 2.
FIG. 4 is an enlarged view of a main part of FIG. 3.
FIG. 5 is a detailed view of a portion of the central part illustrated in FIG. 4.
FIG. 6 is a set of schematic cross-sectional views of a tumble flow passage in a cylinder head, (a) illustrating an example in which a curved portion is connected in an S shape, (b) illustrating an example in which a straight portion is connected to an S-shaped portion.
FIG. 7 is a right-hand side elevational view, partly in cross section, of a power unit that incorporates an air intake structure for an internal combustion engine according to Embodiment 2 of the present invention.

### [Description of Embodiments of the Invention]

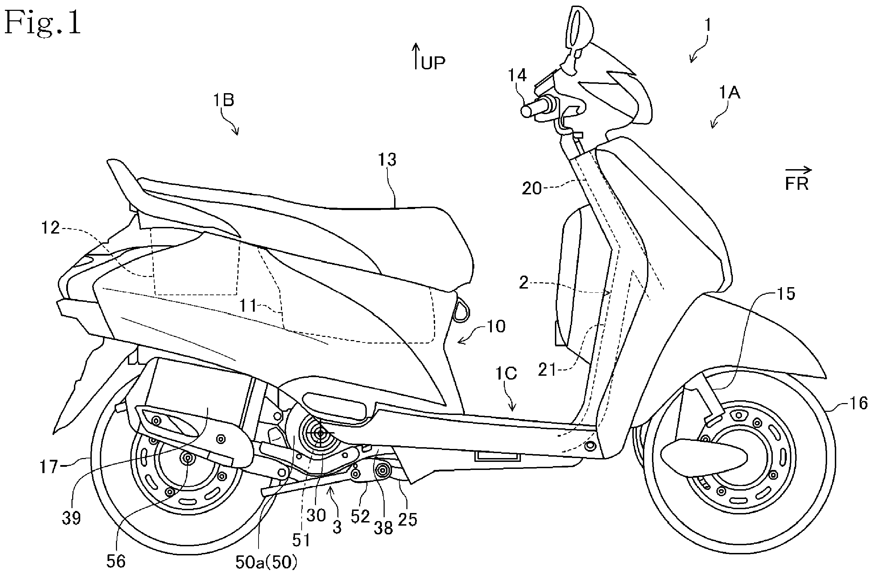

An air intake structure for an internal combustion engine according to Embodiment 1 of the present invention will be described below with reference to FIGS. 1 through 5.

Directions such as forward, rearward, leftward, rightward, upward, and downward directions in the present description and scope of claims for patent will be referred to in accord with the directions of a vehicle that includes a power unit incorporating the air intake structure for an internal combustion engine according to the present embodiment. In the present embodiment, the vehicle is a small-sized vehicle, specifically, a motorcycle.

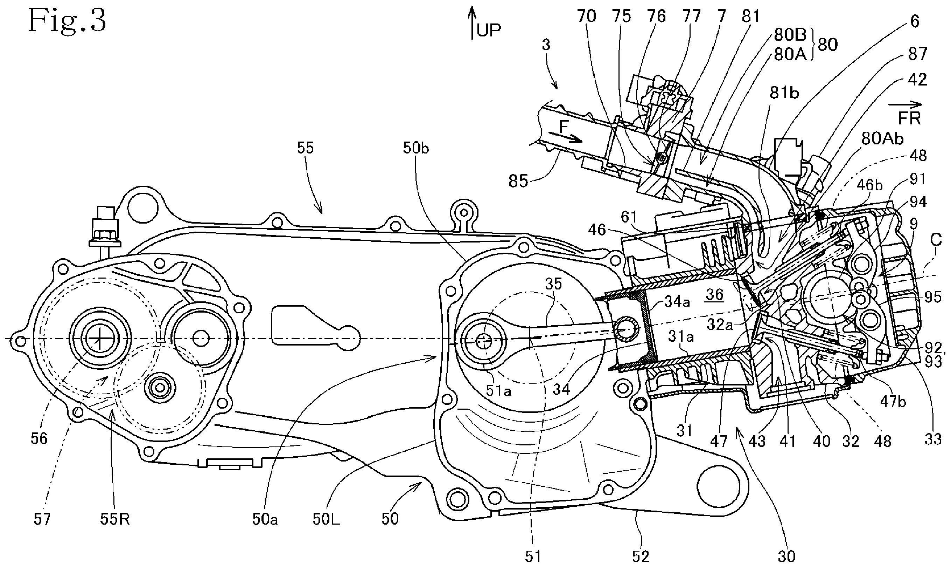

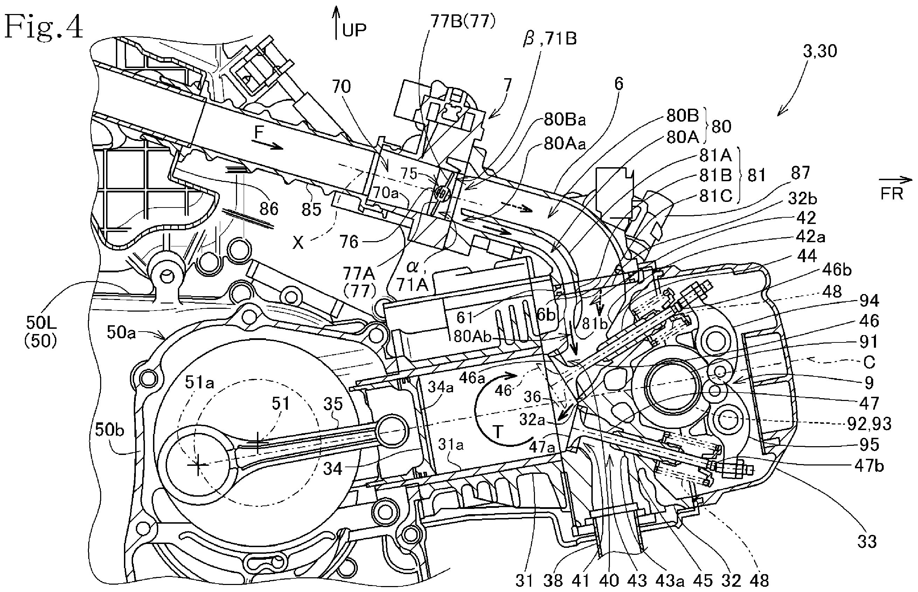

However, with respect to an intake passage 70 in a throttle body 7 and an intake passageway 80 (see FIGS. 3 and 4), regions upward and downward of a partition 81 that divides the intake passage 70 and the intake passageway 80 along the direction of an intake flow will be referred to as an "upper" side and a "lower" side, respectively.

In the drawings, an arrow FR refers to a forward direction of the vehicle, an arrow LH a leftward direction of the vehicle, an arrow RH a rightward direction of the vehicle, and an arrow UP an upward direction of the vehicle.

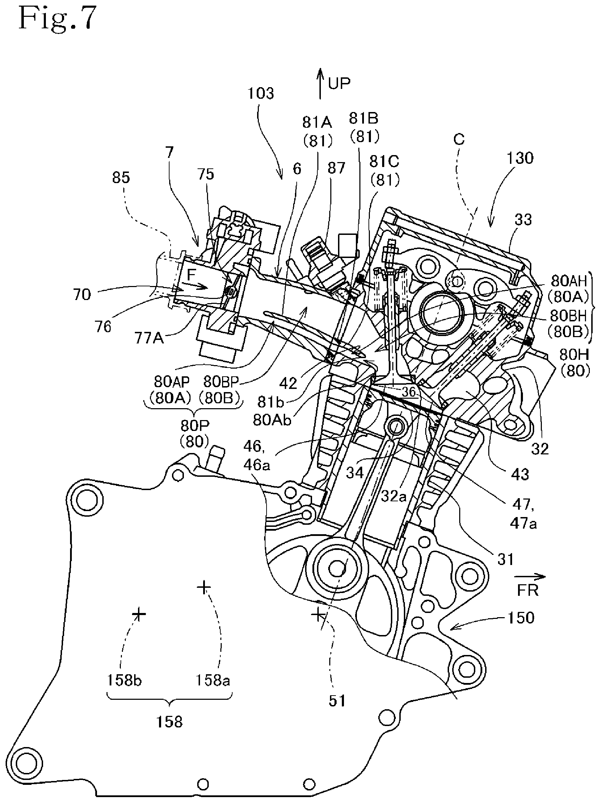

The above directional expressions also apply to Embodiment 2 illustrated in FIG. 7.

FIG. 1 illustrates a right-hand side elevation of a motorcycle 1 having a power unit 3 that incorporates the air intake structure for an internal combustion engine according to Embodiment 1 of the present invention.

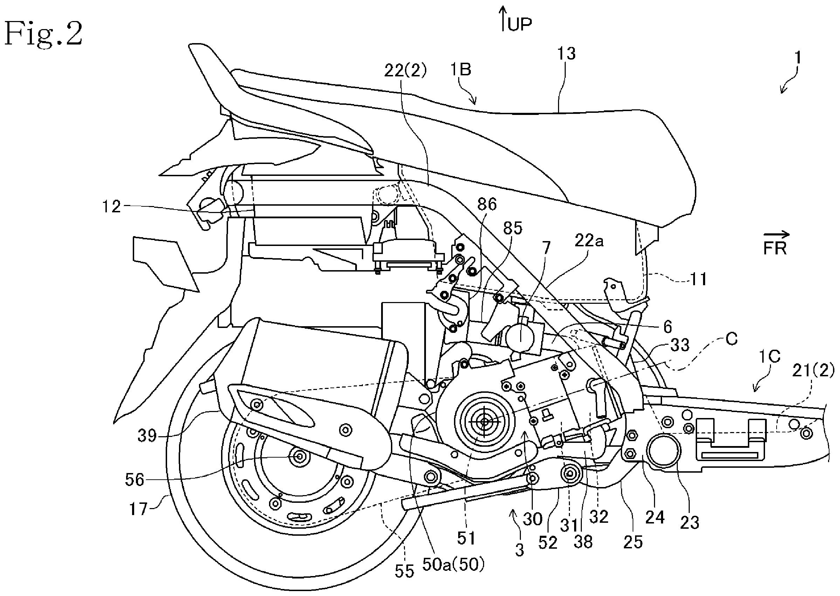

The motorcycle 1 according to the present embodiment is a so-called scooter-type motorcycle having a front vehicle portion 1A and a rear vehicle portion 1B that are coupled to each other by a low floor portion 1C. The motorcycle 1 includes a vehicle body frame 2 as a vehicle body skeleton that is generally made up of a downtube 21 and a pair of main pipes 22 as illustrated in FIG. 2.

Specifically, the downtube 21 extends downwardly from a head pipe 20 of the front vehicle portion 1A, is then bent horizontally at a lower end and extends rearwardly beneath the floor portion 1C, and has a rear end coupled to the pair of left and right main pipes 22 by a joint frame 23 extending transversely in widthwise directions of the vehicle. The main pipes 22 extend obliquely rearwardly and upwardly as slanted portions 22a from the joint frame 23, and are then bent so as to be less slanted and extend rearwardly.

The slanted portions 22a of the main pipes 22 support thereon a storage box 11 and a fuel tank 12 disposed thereabove. The storage box 11 and the fuel tank 12 are closed by a rider's seat 13 mounted on upper portions thereof. The storage box 11, the fuel tank 12, and a lower portion of the rider's seat 13 are covered with a vehicle body cover 10.

In the front vehicle portion 1A, a handle 14 is rotatably supported on and disposed above the head pipe 20. A front wheel 16 is rotatably supported on a lower end of a front fork 15 extending downwardly in the front vehicle portion 1A.

As illustrated in FIG. 2, which illustrates a rear right-hand side elevation of the motorcycle 1 with the vehicle body cover 10 removed, a bracket 24 projects from the slanted portions 22a of the main pipes 22 in the vicinity lower ends thereof. The power unit 3 is swingably coupled to and supported on the bracket 24 by a link member 25.

The power unit 3 includes in its front portion a single-cylinder four-stroke cycle internal combustion engine (hereinafter referred to simply as "internal combustion engine") 30. The internal combustion engine 30 has a crankshaft 51 extending transversely in the widthwise directions and rotatably supported on a front portion of a power unit case 50 that includes a crankcase 50a. The internal combustion engine 30 is of such a posture that a cylinder axis C is largely forwardly inclined nearly horizontally, e.g., at an angle equal to or smaller than 1/2 of the right angle with respect to the horizontal plane. A hanger arm 52 projecting forwardly from a lower end of the power unit case 50 has an end portion coupled to the link member 25 attached to the bracket 24 of the main pipes 22 so as to be vertically swingable.

The power unit 3 includes a cylinder block 31, a cylinder head 32, and a cylinder head cover 33 of the internal combustion engine 30 that are largely forwardly inclined nearly horizontally and successively stacked and fastened to a front portion of the power unit case 50 including the crankcase 50a. A power transmission case 55 that houses a belt-type continuously variable transmission, etc. therein is integrally disposed on a left side of and extends rearwardly from the crankcase 50a. The power transmission case 55 includes in a rear portion thereof a rear axle 56 as an output shaft of the power unit 3. A rear wheel 17 is mounted on the rear axle 56.

Stated otherwise, the power unit 3 is a so-called swing unit with a rear cushion, not illustrated, interposed between the power transmission case 55 in a rear portion of the power unit 3 and rear portions of the main pipes 22.

As illustrated in FIG. 2, above the power unit 3, an inlet pipe 6 extends and is bent rearwardly from an upper portion of the largely forwardly inclined cylinder head 32 of the internal combustion engine 30. The inlet pipe 6 is connected to a throttle body 7 positioned above the cylinder block 31. An air cleaner device 86 that is connected to the throttle body 7 through a connecting tube 85 is disposed above the power transmission case 55.

An exhaust pipe 38 that extends downwardly from a lower portion of the cylinder head 32 is bent rearwardly, shifted rightwardly, extends rearwardly, and is connected to a muffler 39 on the right side of the rear wheel 16.

FIG. 3 is a sectional side elevational view of the power unit 3 illustrated in FIG. 2, as viewed in substantially the same orientation as FIG. 2.

The cylinder block 31, the cylinder head 32, and the cylinder head cover 33 of the internal combustion engine 30 of the power unit 3 are illustrated as left half cross sections. The power unit case 50 is illustrated as a left case half 50L having a mating surface 50b to mate with a right case half, not illustrated, the mating surface 50b facing the viewer of FIG. 3.

The power unit case 50 is made up of a left case half 50L and a right case half, not illustrated, that are separably combined together. The right case half functions as a right half of the crankcase 50a, whereas the left case half 50L includes a front portion functioning as a left half of the crankcase 50a and extending rearwardly into the power transmission case 55. The power transmission case 55 extends longitudinally between the crankshaft 51 and the rear axle 56 of the rear wheel 17 and houses therein the elongate belt-type continuously variable transmission, not illustrated, and a transmission device including a speed reducer gear mechanism 57, etc.

The speed reducer gear mechanism 57 is housed in a rear rightwardly open section 55R of the power transmission case 55 and covered with a speed reducer case, not illustrated. The speed reducer gear mechanism 57 has an output shaft functioning as the rear axle 56 of the rear wheel 17.

Rotational power from the crankshaft 51 in the crankcase 50a of the internal combustion engine 30 is transmitted to the rear wheel 17 through the continuously variable transmission and the speed reducer gear mechanism 57 in the power transmission case 55.

The cylinder block 31 has a cylinder bore 31a defined therein with a piston 34 reciprocably disposed therein. The piston 34 is coupled to a crankpin 51a of the crankshaft 51 in the crankcase 50a by a connecting rod 35.

The piston 34 that is slidably fitted in the cylinder bore 31a in the cylinder block 31 has a top surface 34a facing a combustion chamber ceiling surface (ceiling surface) 32a of the cylinder head 32. The top surface 34a and the ceiling surface 32a define a combustion chamber 36 therebetween.

According to the present embodiment, the internal combustion engine 30 incorporates a single overhead camshaft (SOHC) two-valve system having a valve operating mechanism 9 disposed in the cylinder head 32. A cylinder head cover 33 is placed on the cylinder head 32 in covering relation to the valve operating mechanism 9.

The valve operating mechanism 9 in the cylinder head cover 33 is actuatable by power transmitted by an endless cam chain, not illustrated, housed in a cam chain compartment, not illustrated, defined beside the crankcase 50a, the cylinder block 31, and the cylinder head 32. The endless cam chain is trained around a camshaft 91 and the crankshaft 51. The camshaft 91 is rotatable about its own axis at a rotational speed that is 1/2 of the rotational speed of the crankshaft 51 in synchronism therewith.

A spark ignition plug, not illustrated, is inserted into the cylinder head 32 from one side thereof remote from the cam chain compartment, i.e., at the other axial end of the crankshaft 51, toward the combustion chamber 36.

As illustrated in FIG. 3 and FIG. 4 that is an enlarged view of a central part of FIG. 3, the cylinder head 32 with the cylinder axis C largely forwardly inclined nearly horizontally has an intake port 42 and an exhaust port 43 defined therein that are curved and extend vertically separately from each other respectively from an intake valve port 40 and an exhaust valve port 41 that are open in the combustion chamber ceiling surface 32a.

The intake port 42 has an upstream end that is open upwardly in the cylinder head 32 and connected to an inlet pipe 6, defining a continuous intake passageway 80. A throttle body 7 is connected to an upstream end of the inlet pipe 6.

The exhaust port 43 has a downstream end that is open downwardly in the cylinder head 32 and connected to the exhaust pipe 38 (see FIG. 2).

The intake port 42 in the cylinder head 32 is defined by a curved outer wall 42a with a tubular intake valve guide 44 fitted integrally therein. An intake valve 46 that is slidably supported in the intake valve guide 44 is axially movable to open and close the intake valve port 40 through which the intake port 42 faces the combustion chamber 36.

The exhaust port 43 in the cylinder head 32 is defined by a curved outer wall 43a with a tubular exhaust valve guide 45 fitted integrally therein. An exhaust valve 47 that is slidably supported in the exhaust valve guide 45 is axially movable to open and close the exhaust valve port 41 through which the exhaust port 43 faces the combustion chamber 36.

The intake valve 46 and the exhaust valve 47 are normally urged to move upwardly by valve springs 48 to cause respective valve heads 46a and 47a to close the intake valve port 40 and the exhaust valve port 41, respectively, that are open into the combustion chamber 36. As illustrated in FIG. 3, when stem ends 46b and 47b of the intake valve 46 and the exhaust valve 47 are depressed respectively by an intake rocker arm 94 and an exhaust rocker arm 95 that abut against and are rocked by an intake cam 92 and an exhaust cam 93, respectively, on the camshaft 91, the intake valve 46 and the exhaust valve 47 are opened at predetermined timings to bring the intake port 42 and the exhaust port 43 into fluid communication with the combustion chamber 36, thereby introducing an air-fuel mixture into the combustion chamber 36 and discharging an exhaust gas out of the combustion chamber 36.

In order to burn the air-fuel mixture better in the combustion chamber 36, the air intake structure in the internal combustion engine 30 is constructed to produce a tumbling flow T of the air-fuel mixture in the combustion chamber 36, i.e., to cause the air-fuel mixture to tumble vertically in the combustion chamber 36.

Specifically, the inlet pipe 6 is connected through an insulator 61 to the upstream end of the intake port 42 of the internal combustion engine 30, defining the continuous intake passageway 80 that is of a substantially circular cross-sectional shape. The throttle body 7 is connected to the upstream end of the inlet pipe 6.

The throttle body 7 has an intake passage 70 defined therein that is of a substantially circular cross-sectional shape. The intake passage 70 functions as part of the intake passageway 80 that is contiguous to the combustion chamber 36. The intake passage 70 has an upstream end connected to the air cleaner device 86 (see FIG. 2) through the connecting tube 85.

The throttle body 7 houses therein a throttle valve 75 rotatably supported thereon by a throttle valve shaft 76 that extends perpendicularly to an intake flow direction F in the intake passage 70, i.e., that is oriented substantially horizontally perpendicularly to a central axis X of the intake passage 70. The throttle valve 75 is angularly movable by the throttle valve shaft 76 to vary the cross-sectional area of the intake passage 70, i.e., to selectively open and close the intake passage 70.

The throttle valve 75 is in the form of a butterfly valve including the throttle valve shaft 76 and a disk-shaped valve body 77 fixed to the throttle valve shaft 76 for rotation in unison therewith. The valve body 77 has an end portion 77A and another end portion 77B.

The throttle valve 75 is angularly movable clockwise in FIGS. 3 and 4 in a direction to open the intake passage 70 in response to an operation of the rider of the motorcycle. The throttle valve 75 is normally urged by a return spring, not illustrated, to turn counterclockwise to a closed position in which it fully closes the intake passage 70. In the fully closed position, the end portion 77A of the valve body 77 abuts against an inner surface 70a of the intake passage 70 and the other end portion 77B thereof abuts against the inner surface 70a of the intake passage 70.

According to the present embodiment, the intake passage 70 in the throttle body 7 is oriented substantially horizontally, with the end portion 77A being a lower end portion of the valve body and the other end portion 77B being an upper end portion of the valve body.

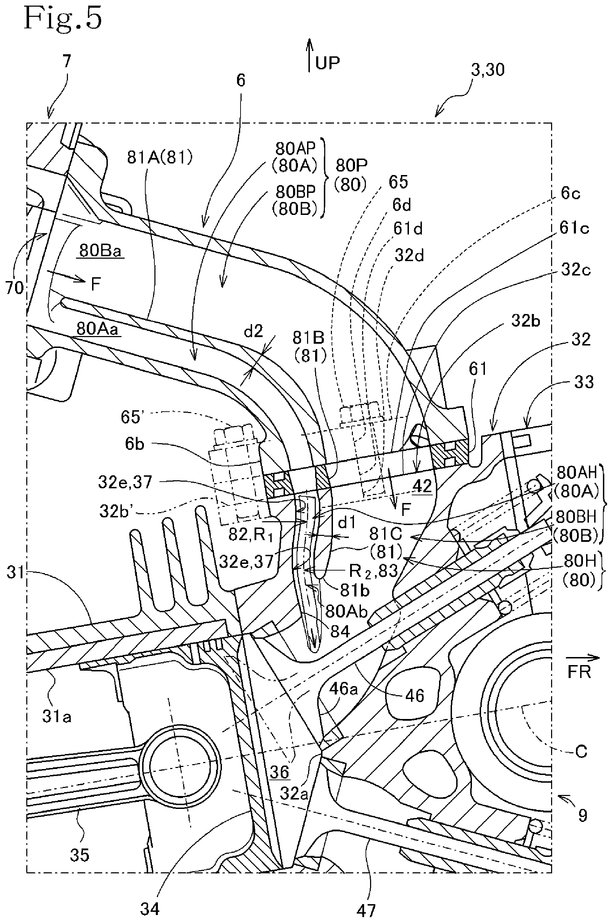

As illustrated in FIG. 4 and FIG. 5 that is a detailed view of a portion of the central part illustrated in FIG. 4, according to the present embodiment, the intake passageway 80 includes an intake passageway 80H defined in the cylinder head 32 and an intake passageway 80P defined in the inlet pipe 6. The intake passageway 80 is divided by a partition 81 extending from the inlet pipe 6 into the intake port 42 along the intake flow direction F, into a tumble flow passage 80A for causing intake air flowing therethrough to produce a tumbling flow T in the combustion chamber 36 and a main flow passage 80B as the remainder of the intake passageway 80 that excludes the tumble flow passage 80A. The tumble flow passage 80A includes a tumble flow passage 80AH defined in the cylinder head 32 and a tumble flow passage 80AP defined in the inlet pipe 6. The main flow passage 80B that excludes the tumble flow passage 80A includes a main flow passage 80BH defined in the cylinder head 32 and a main flow passage 80BP defined in the inlet pipe 6.

In the present embodiment, the intake passageway 80 is divided by the partition 81 into a lower portion as the tumble flow passage 80A and an upper portion as the main flow passage 80B. However, the present invention is not limited to such a layout of upper and lower flow passages.

In the present description, directions such as upward and downward directions and similar directional expressions with respect to the intake passageway 80, the intake passage 70, and the throttle valve 75 are used with respect to the cylinder axis C such that a direction along the cylinder axis C toward the cylinder head cover 33 is referred to as an upward direction whereas a direction along the cylinder axis C toward the cylinder block 31 is referred to as a downward direction. Therefore, the upward and downward directions used herein do not represent absolute spatial upward and downward directions.

The partition 81 includes an inlet-pipe-side partition section 81A, an insulator-side partition section 81B, and an intake-port-side partition section 81C that are positioned successively from an upstream side toward a downstream side along the intake flow.

The main flow passage 80B that is illustrated as the upper flow passage and the tumble flow passage 80A that is illustrated as the lower flow passage extend longitudinally from the inlet pipe 6 into the intake port 42, and have substantially semicircular cross-sectional shapes, respectively, defined by the partition 81 as it divides the intake passageway 80 vertically as illustrated downstream of the throttle valve 75.

The partition 81 has surfaces extending transversely across the intake passageway 80 and lying parallel to the throttle valve shaft 76.

The tumble flow passage 80AP of the intake passageway 80P in the inlet pipe 6 that is connected to a downstream end of the intake passage 70 in the throttle body 7 has an inlet opening 80Aa positioned downstream of the end portion 77A of the throttle valve 75. The main flow passage 80BP has an inlet opening 80Ba positioned downstream of the other end portion 71B of the throttle valve 75.

A fuel injection valve 87 that is mounted on the inlet pipe 6 extends from outside downwardly into the main flow passage 80BP for injecting fuel toward the intake valve port 40.

As illustrated in FIGS. 4 and 5, the partition 81 in the intake passageway 80H in the cylinder head 32 has an integral downstream end 81b positioned in the intake port 42 and curved in the cylinder head 32 toward the cylinder block 31. The tumble flow passage 80AH has a downstream end 80Ab oriented toward the combustion chamber ceiling surface 32a of the cylinder head 32.

As indicated by the small arrow in FIG. 4, intake air that flows through the tumble flow passage 80AH is guided to pass over the valve head 46a of the intake valve 46 and then flows into the cylinder bore 31a from a space between a rear surface of the valve head 46a of the intake valve 46 closer to the exhaust valve 47 and the combustion chamber ceiling surface 32a. Accordingly, the intake air thus guided is liable to produce the tumbling flow T in the combustion chamber 36. The tumble flow passage 80A is thus constructed to cause the intake air flowing therethrough to produce the tumbling flow T.

According to the present embodiment, when the throttle valve 75 is slightly opened at the time the internal combustion engine 30 operates under a low load, much intake air is introduced into the tumble flow passage 80A. At the time the internal combustion engine 30 operates under a high load, intake air is guided smoothly into the tumble flow passage 80A and the main flow passage 80B depending on the opening of the throttle valve 75, i.e., the throttle opening.

The phrase "slightly opened" in the present description refers to an extent of opening ranging from a fully closed state of the throttle valve 75 to a degree of opening of the throttle valve 75 at the time the internal combustion engine 30 operates under a low load. The extent of opening may be set to a desired level depending on the characteristics of the internal combustion engine under a low load. Though the extent of opening is assumed to range from the fully closed state of the throttle valve 75 to the throttle opening of 30% in the present embodiment, it should not be limited to such a range.

As illustrated in FIG. 4, when the throttle valve 75 according to the present embodiment is fully closed, an angle α at which the end portion 77A abuts against the inner surface 70a of the intake passage 70 downstream of the end portion 77A with respect to the intake flow direction F is an acute angle, whereas an angle β at which the other end portion 77B abuts against the inner surface 70a of the intake passage 70 downstream of the other end portion 77B with respect to the intake flow direction F is an obtuse angle.

When the throttle valve 75 is slightly opened from the fully closed position, intake air passes from the intake passage 70 upstream of the throttle valve 75 through a gap (hereinafter referred to as "acute-angle-side gap") 71A between the end portion 77A and the inner surface 70a and a gap ("obtuse-angle-side gap") 71B between the other end portion 77B and the inner surface 70a, and flows from the intake passage 70 downstream of the throttle valve 75 into the intake passageway 80P in the inlet pipe 6.

The intake air that has passed through the acute-angle-side gap 71A is directed downstream as an intensive convergent flow. The intake air that has passed through the obtuse-angle-side gap 71B flows as a divergent flow spreading in a wide negative-pressure area including an area downstream of the throttle valve shaft 76. Part of the intake air of the divergent flow flows back and joins the convergent flow of intake air that has passed through the acute-angle-side gap 71A.

The partition 81 disposed in the intake passageway 80 that is connected to the downstream end of the throttle valve 75 divides the intake passageway 80 along the intake flow direction F into the tumble flow passage 80A disposed on the acute-angle-side gap 71A side, i.e., downstream of the end portion 77A of the throttle valve 75 and the main flow passage 80B disposed on the obtuse-angle-side gap 71B, i.e., downstream of the other end portion 77B of the throttle valve 75, the main flow passage 80B being larger in cross-sectional area than the tumble flow passage 80A and including the area downstream of the throttle valve shaft 76. When the throttle valve 75 is slightly opened, a backflow of intake air from the main flow passage 80B is caused to join the flow of intake air in the tumble flow passage 80A, resulting in a localized flow of intake air in the tumble flow passage 80A.

According to the present invention, the mechanism for introducing much intake air into the tumble flow passage 80A when the internal combustion engine 30 operates under a low load and when the throttle valve 75 is slightly opened is not limited to throttle valve 75 according to the present embodiment, but may incorporate any of throttle valves having different structures, layouts, and operations, and may also include a separate control valve for guiding intake air into the tumble flow passage in addition to the throttle valve.

At any rate, the present invention is characterized in the structure of the partition 81 that divides the intake passageway 80 into the tumble flow passage 80A and the main flow passage 80B and the structure of the tumble flow passage 80A.

According to the present embodiment, as described above, the downstream end 80Ab of the tumble flow passage 80AH in the cylinder head 32 is oriented toward the combustion chamber ceiling surface 32a of the cylinder head 32, and the downstream end 81b of the partition 81 in the cylinder head 32, i.e., the intake-port-side partition section 81C, is curved toward the cylinder block 31.

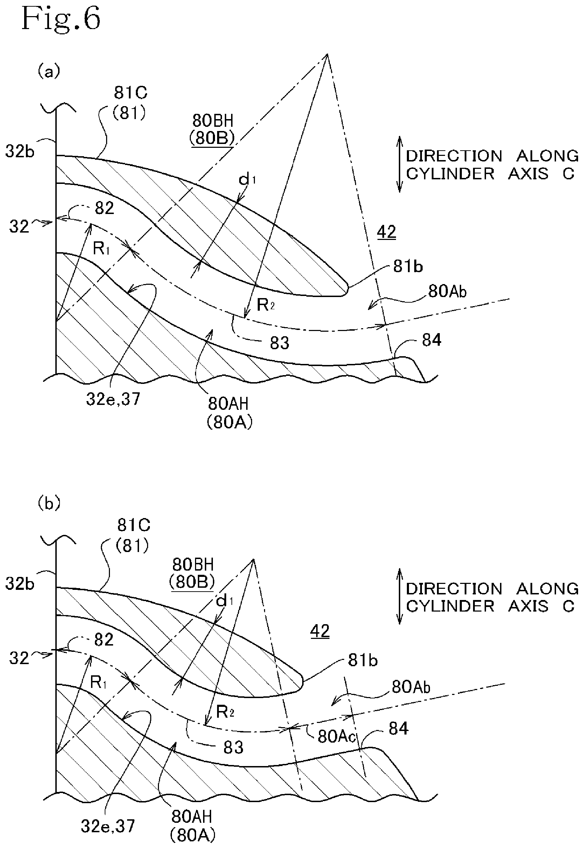

Furthermore, as illustrated in FIG. 5 that is a detailed view of a portion of the central part illustrated in FIG. 4, and FIG. 6 that is a set of schematic cross-sectional views of the tumble flow passage 80AH in the cylinder head 32, the tumble flow passage 80A in the cylinder head 32 is of an S shape including a first curved portion 82 that is curved concavely toward the cylinder block 31 along the cylinder axis C and a second curved portion 83 that is curved convexly toward the cylinder block 31 downstream of the first curved portion 82.

According to the present embodiment, the partition 81 in the cylinder head 32, i.e., the intake-port-side partition section 81C, is not formed straight from an upstream side toward a downstream side with respect to the intake flow by placing a flat plate in a mold when the cylinder head 32 is cast therein, but is formed to a free shape for making the defined tumble flow passage 80A operate preferably as desired.

The partition 81 may be manufactured according to an appropriate fabrication process such as a process of placing a partition member having a desired shape in a mold when the cylinder head 32 is cast therein or a process of casting the cylinder head 32 in a mold using a core having a desired shape.

According to the present embodiment, specifically, the downstream end 81b of the partition 81 in the cylinder head 32, i.e., the intake-port-side partition section 81C, is curved so as to have a component directed toward the cylinder block 31, and the tumble flow passage 80AH in the cylinder head 32 has two curved portions that are curved in opposite directions to each other. With this structure, the tumble flow passage 80AH in the cylinder head 32 has an increased degree of freedom as to its passage shape and layout, allowing the downstream end 80Ab of the tumble flow passage 80A to be oriented toward the combustion chamber ceiling surface 32a without involving large changes in the cross-sectional areas of the tumble flow passage 80AH and the main flow passage 80BH.

As schematically illustrated at (a) in FIG. 6, the tumble flow passage 80AH in the cylinder head 32 may be of an S shape including only two curved portions, i.e., the first curved portion 82 and the second curved portion 83. However, the present invention is not limited to such details. As schematically illustrated at (b) in FIG. 6, the tumble flow passage 80AH in the cylinder head 32 may include the first curved portion 82, the second curved portion 83 that changes the direction of a downstream end of the first curved portion 82, and a straight portion 80Ac extending downstream from the second curved portion 83 to the downstream end 80Ab.

The first curved portion 82 and the second curved portion 83 may be defined as localized curved portions.

The phrase "S shape" referred to above is not limited to a shape in which the first curved portion 82 and the second curved portion 83 are directly connected to each other, but may be a shape in which a straight flow passage portion is interposed between the first curved portion 82 and the second curved portion 83.

The partition 81 in the cylinder head 32, i.e., the intake-port-side partition section 81C, has a thickness d1 that varies from an upstream side toward a downstream side along the intake flow direction F. Accordingly, even though the tumble flow passage 80A in the cylinder head 32 has a plurality of curved portions, it is easy to adjust the cross-sectional areas of the tumble flow passage 80AH and the main flow passage 80BH in the cylinder head 32 by varying the thickness d1 of the partition 81 in the cylinder head 32, i.e., the intake-port-side partition section 81C, so that the degree of freedom of the passage shape and layout of the tumble flow passage 80AH is increased.

As illustrated in FIGS. 4 and 5, the cylinder head 32 has a joint surface 32b to which the inlet pipe 6 is connected, at the upstream end of the intake port 42. The inlet pipe 6 has a joint portion 6b fastened and connected to the joint surface 32b through the insulator 61. The intake passageway 80, i.e., the intake passageways 80H and 80P, is perpendicular to the joint surface 32b at the joint surface 32b.

Therefore, the inlet pipe 6 can easily be mounted on the cylinder head 32.

According to the present embodiment, as described above, the internal combustion engine 30 is mounted on the motorcycle 1 with the cylinder axis C forwardly inclined nearly horizontally. The inlet pipe 6 is curved and extends rearwardly with respect to the vehicle from the joint portion 6b connected to the cylinder head 32. The intake passageway 80P in the inlet pipe 6 includes the partition 81 along the intake flow direction, i.e., the inlet-pipe-side partition section 81A, and is divided into the tumble flow passage 80AP and the main flow passage 80BP by the partition 81. The partition 81 in the inlet pipe 6, i.e., the inlet-pipe-side partition section 81A, has a thickness d2 that varies from an upstream side toward a downstream side along the intake flow direction F.

Therefore, even though the inlet pipe 6 is curved and extends rearwardly with respect to the vehicle from the joint portion 6b connected to the cylinder head 32, and the intake passageway 80P is curved, it is easy to adjust the cross-sectional areas of the tumble flow passage 80AP and the main flow passage 80BP in the inlet pipe 6 by varying the thickness d2 of the partition 81 in the inlet pipe 6, i.e., the inlet-pipe-side partition section 81A, so that the degree of freedom of the passage shape and layout of the tumble flow passage 80AP is increased. For example, the thickness d2 of the partition 81 in the inlet pipe 6, i.e., the inlet-pipe-side partition section 81A, is maximum where the curvature of the inlet pipe 6 is the largest, i.e., the radius of curvature is the smallest.

As illustrated in FIG. 5, the cylinder head 32, the inlet pipe 6, and the insulator 61 interposed therebetween have respective fastening flanges 32c, 6c, and 61c. The flanges 32c, 6c, and 61c have respective thread-in portions 32d, 6d, and 61d defined therein on left and right sides of the intake passageways 80, i.e., the intake passageways 80H and 80P, or on sides closer to and remoter from the viewer of FIG. 5. When fastening members 65 are threaded into the thread-in portions 32d, 6d, and 61d, the inlet pipe 6 is fastened and joined to the cylinder head 32 with the insulator 61 interposed therebetween.

The first curved portion 82 of the tumble flow passage 80AH in the cylinder head 32 is disposed upstream of the second curved portion 83 and downstream of the joint surface 32b of the cylinder head 32 to which the inlet pipe 6 is connected. The first curved portion 82 has a radius R1 of curvature on a cross section including the cylinder axis C and lying across the intake passageway 80, i.e., the cross section illustrated in FIG. 5. The radius R1 of curvature is smaller than a radius R2 of curvature of the second curved portion R2 on the same cross section.

Since the first curved portion 82 whose radius R1 of curvature is smaller is disposed downstream of the joint surface 32b of the cylinder head 32 to which the inlet pipe 6 is connected, the tumble flow passage 80AH at the joint surface 32b can be disposed closely to the main flow passage 80BH. The layout of the tumble flow passage 80AH and the main flow passage 80BH is thus made compact, allowing the flanges 32c, 6c, and 61c small in size.

Specifically, in the air intake structure in which the inlet pipe 6 extends rearwardly with respect to the vehicle, in case the downstream end 80Ab of the tumble flow passage 80AH in the cylinder head 32 is oriented toward the combustion chamber ceiling surface 32a for producing the tumbling flow T, the tumble flow passage 80AH at the joint surface 32b of the cylinder head 32 to which the inlet pipe 6 is connected tends to be positioned closely to the cylinder block 31 along the cylinder axis C, making it necessary to enlarge a j oint surface 32b' and to make the flanges 32c, 6c, and 61c larger in size, as indicated by the two-dot-and-dash lines in FIG. 5.

Thus, the structure of the joint surface 32b' is liable to be complex, and it is necessary to increase the number of fastening members including an additional fastening member 65' behind the intake passageways 80, i.e., the intake passageways 80H and 80P, or on the left side in FIG. 5. As a result, the number of parts used is increased.

According to the present embodiment, as illustrated in FIG. 5, inasmuch as the radius R1 of curvature of the upstream first curved portion 82 is smaller than the radius R2 of curvature of the second curved portion 83, i.e., the curvature of the first curved portion 82 is increased, the tumble flow passage 80AH at the joint surface 32b can be disposed closely to the main flow passage 80BH. The joint surface 32b is thus prevented from being enlarged, and as the second curved portion 83 is connected to the first curved portion 82 downstream thereof, the downstream end 80Ab of the tumble flow passage 80AH is oriented toward the combustion chamber ceiling surface 32a for intensifying the tumbling flow T. In addition, the joint surface 32b can be reduced in size.

Moreover, the tumble flow passage 80AH in the cylinder head 32 includes a plurality of curved portions 37 having different curvatures, defined by an inner wall 32e of the cylinder head. The curved portions 37 allow the tumble flow passage 80A to have an increased degree of freedom as to its passage shape.

At the downstream end 80Ab of the tumble flow passage 80AH, the cylinder head 32 has an edge flow passage wall 84 having an edge oriented toward the combustion chamber ceiling surface 32a, where the downstream end 80Ab of the tumble flow passage is open into and joins the main flow passage 80B.

Consequently, intake air is prevented from spreading over the entire rear surface of the valve head 46a of the intake valve 46 because intake air would tend to spread so if the opening of the downstream end 80Ab of the tumble flow passage 80AH were enlarged. Rather, intake air is intensely guided from the tumble flow passage 80AH into the space between the rear surface of the valve head 46a of the intake valve 46 closer to the exhaust valve 47 and the combustion chamber ceiling surface 32a, thereby intensifying the tumbling flow T in the combustion chamber 36.

The air intake structure for the internal combustion engine according to the present invention has been described above as being applied to the power unit 3 that functions as the swing unit according to Embodiment 1. However, the air intake structure for the internal combustion engine according to the present invention is not limited to only the power unit 3 whose cylinder axis C is forwardly inclined nearly horizontally, but is also applicable to power units of other types.

For example, the air intake structure for the internal combustion engine according to the present invention may also be applied, with similar advantages, to a power unit 103, illustrated in FIG. 7, for use on a vehicle, including an internal combustion engine with an upstanding cylinder axis C, i.e., a vertical internal combustion engine 130.

The air intake structure as applied to the power unit 103 will be described below as Embodiment 2.

The power unit 103, whose right-hand side elevation, partly in cross section, is illustrated in FIG. 7, is of a posture illustrated in FIG. 7 as it is fixedly mounted on the vehicle body frame of a motorcycle. The power unit 103 includes a cylinder block 31, a cylinder head 32, and a cylinder head cover 33 that are slightly forwardly inclined upwardly and successively stacked and fastened to a front portion of the power unit case 150, making up the internal combustion engine 130 with a crankshaft 51 extending transversely in the widthwise directions of the motorcycle.

In the power unit 103 according to Embodiment 2, the internal combustion engine 130 incorporates an SOHC two-valve system.

A gear transmission 158 having a main shaft 158a and a countershaft 158b that extend parallel to the crankshaft 51 is housed in a rear portion of the power unit case 150. The countershaft 158b functions as an output shaft of the power unit 103.

An exhaust port 43 is open in a front portion of the cylinder head 32 and connected to an exhaust pipe, not illustrated. An intake port 42 is open in a rear portion of the cylinder head 32 and is connected successively rearwardly, i.e., upstream with respect to an intake flow direction, to an inlet pipe 6, a throttle body 7, and a connecting tube 85 that is connected to an air cleaner device, not illustrated.

The throttle body 7 houses therein a throttle valve 75 similar to the throttle valve according to Embodiment 1. The throttle valve 75 has features similar to those described in Embodiment 1.

A partition 81 similar to the partition according to Embodiment 1 is disposed in an intake passageway 80P in the inlet pipe 6. The intake passageway 80P is divided into a tumble flow passage 80AP defined in a lower portion thereof downstream of a lower end portion of the throttle valve 75, i.e., an end portion 77A, and a main flow passage 80BP as the remainder of the intake passageway 80P that excludes the tumble flow passage 80A.

The intake port 42 in the cylinder head 32 is connected to the downstream end of the inlet pipe 6, and defines an intake passageway 80H in the cylinder head 32. The intake passageway 80H in the cylinder head 32 is divided into a tumble flow passage 80AH and a main flow passage 80BH in the same manner as with Embodiment 1. The tumble flow passage 80AH similarly has a first curved portion 82 and a second curved portion 83 (see FIG. 6). The tumble flow passage 80AH has a downstream end 80Ab oriented toward a combustion chamber ceiling surface 32a, and has features similar to those described in Embodiment 1.

The partition 81 that divides an intake passageway 80 into a tumble flow passage 80A and a main flow passage 80B has features similar to those described in Embodiment 1.

Therefore, according to Embodiment 2, as illustrated in FIG. 7, the air intake structure for the internal combustion engine according to the present invention is applied in a manner similar to the air intake structure according to Embodiment 1, and operates in a similar fashion and offers similar advantages.

While Embodiment 1 and Embodiment 2 according to the present invention have been described above, the present invention is not limited to the above embodiments, but various design changes can be made without departing from the scope of the claims.

The parts have been described in the left-right layout according to the illustrated embodiments for the convenience of explanation. However, parts in different left-right layouts are also covered by the invention insofar as they fall within the scope of the claims.

### [Reference Signs List]

1···Motorcycle, 3, 103···Power unit, 6···Inlet pipe, 6b···Joint portion, 6c···Flange, 6d···Thread-in portion, 7···Throttle body, 30, 130···Internal combustion engine, 31···Cylinder block, 31a···Cylinder bore, 32···Cylinder head, 32a···Combustion chamber ceiling surface ("ceiling surface" according to the present invention), 32b, 32b'···Joint surface, 32c···Flange, 32d···Thread-in portion, 32e···Inner wall of cylinder head, 36···Combustion chamber, 34···Piston, 37···Curved portion, 40···Intake valve port, 42···Intake port, 42a···Curved outer wall, 46···Intake valve, 46a ... Valve head, 47···Exhaust valve, 47a···Valve head, 50, 150···Power unit case, 51···Crankshaft, 61···Insulator, 61c···Flange, 61d···Thread-in portion, 65, 65'···Fastening member, 70···Intake passage, 70a···Inner surface, 71A...Acute-angle-side gap, 71B...Obtuse-angle-side gap, 75...Throttle valve, 76...Throttle valve shaft, 77...Valve body, 77A...End portion, 77B···Other end portion, 80···Intake passageway, 80H···Intake passageway (in cylinder head 32), 80P···Intake passageway (in inlet pipe 6), 80A···Tumble flow passage, 80AH···Tumble flow passage (in cylinder head 32), 80AP···Tumble flow passage (in inlet pipe 6), 80Aa···Inlet opening, 80Ab···Downstream end, 80Ac···Straight portion, 80B···Main flow passage, 80BH···Main flow passage (in cylinder head 32), 80BP···Main flow passage (in inlet pipe 6), 80Ba···Inlet opening, 81···Partition, 81b···Downstream end, 81A···Inlet-pipe-side partition section, 81B···Insulator-side partition section, 81C···Intake-port-side partition section, 82···First curved portion, 83···Second curved portion, 84···Edge flow passage wall, C···Cylinder axis, F···Intake flow direction, T···Tumbling flow, X···Central axis (of intake passage 70), α···Abutment angle (acute angle), β···Abutment angle (obtuse angle), d1···Thickness (of partition 81 in cylinder head 32), d2...Thickness (of partition 81 in inlet pipe 6), R1···Radius of curvature (of first curved portion 82), R2···Radius of curvature (of second curved portion 83)

## Claims

1. An air intake structure for an internal combustion engine (30) including a cylinder head (32) coupled to a cylinder block (31) and having an intake passageway (80H) defined therein, the intake passageway (80H) housing a partition (81) disposed along an intake flow direction (F) and being divided by the partition (81) into a tumble flow passage (80AH) and a main flow passage (80BH), wherein
the partition (81) in the cylinder head (32) has a downstream end (81b) curved toward the cylinder block (31), and the tumble flow passage (80AH) has a downstream end (80Ab) oriented toward a ceiling surface (32a) of a combustion chamber (36) of the internal combustion engine (30); and
**characterized in that**
the tumble flow passage (80AH) in the cylinder head (32) includes a first curved portion (82) that is curved concavely toward the cylinder block (31) along a cylinder axis (C) of the cylinder block (31) and a second curved portion (83) that is curved convexly toward the cylinder block (31),
the first curved portion (82) of the tumble flow passage (80AH) in the cylinder head (32) is disposed upstream of the second curved portion (83) with respect to the intake flow direction (F) and downstream of a joint surface (32b) of the cylinder head (32) to which an inlet pipe (6) is connected; and
the first curved portion (82) has a radius (R1) of curvature that is smaller than a radius (R2) of curvature of the second curved portion (83).

2. The air intake structure for the internal combustion engine as claimed in claim 1, wherein
the partition (81) in the cylinder head (32) has a thickness (d1) that varies from an upstream side toward a downstream side along the intake flow direction (F).

3. The air intake structure for the internal combustion engine as claimed in claim 1 or 2, wherein
the cylinder head (32) includes a joint surface (32b) to which an inlet pipe (6) for an intake air is connected, at an upstream end of an intake port (42) in the cylinder head (32) and the intake passageway (80H, 80P) is perpendicular to the joint surface (32b) at a region of the joint surface (32b).

4. The air intake structure for the internal combustion engine as claimed in claim 3, wherein
the internal combustion engine (30) includes an internal combustion engine (30) mounted on a vehicle (1) with the cylinder axis (C) forwardly inclined nearly horizontally;
the inlet pipe (6) is curved and extends rearwardly with respect to the vehicle from a joint portion (6b) thereof connected to the cylinder head (32), and the inlet pipe (6) has an intake passageway (80P) defined therein that is divided by the partition (81) disposed along the intake flow direction (F) into a tumble flow passage (80AP) and a main flow passage (80BP); and
the partition (81) in the inlet pipe (6) has a thickness (d2) that varies from an upstream side toward a downstream side along the intake flow direction (F).

5. The air intake structure for the internal combustion engine as claimed in claim 4, wherein
an insulator (61) is interposed between the cylinder head (32) and the inlet pipe (6), the cylinder head (32), the inlet pipe (6), and the insulator (61) have respective flanges (32c, 6c, 61c), and the inlet pipe (6) is fastened and joined to the cylinder head (32) by fastening members (65) threaded into thread-in portions (32d, 6d, 61d) of the flanges.

6. The air intake structure for the internal combustion engine as claimed in claim 1 or 2, wherein
the tumble flow passage (80AH) in the cylinder head (32) includes a plurality of curved portions (37) having different curvatures, defined by an inner wall (32e) of the cylinder block (31).

7. The air intake structure for the internal combustion engine as claimed in claim 1 or 2, wherein
the downstream end (80Ab) of the tumble flow passage (80AH) in the cylinder head (32) is defined by an edge flow passage wall (84) having an edge oriented toward the ceiling surface (32a) of the combustion chamber (36), and the downstream end (80Ab) of the tumble flow passage is open into the main flow passage (80BH) in the intake port (42) so that intake air guided by the downstream end (80Ab) joins intake air guided by the main flow passage (80BH) in the intake port (42).

## Patentansprüche

1. Lufteinlassstruktur für einen Verbrennungsmotor (30), der einen Zylinderkopf (32) aufweist, der mit einem Zylinderblock (31) gekoppelt ist und einen Einlasskanal (80H) darin definiert hat, wobei der Einlasskanal (80H) einen Abschnitt (81) aufnimmt, der entlang einer Einlassströmungsrichtung (F) angeordnet ist, und durch den Abschnitt (81) in einen Tumbleströmungskanal (80AH) und einen Hauptströmungskanal (80BH) unterteilt ist, wobei
der Abschnitt (81) im Zylinderkopf (32) ein nachgelagertes Ende (81b) hat, das in Richtung des Zylinderblocks (31) gebogen ist, und der Tumbleströmungskanal (80AH) ein nachgelagertes Ende (80Ab) hat, das in Richtung einer Deckenfläche (32a) einer Verbrennungskammer (36) des Verbrennungsmotors (30) ausgerichtet ist; und
**dadurch gekennzeichnet ist, dass**
der Tumbleströmungskanal (80AH) im Zylinderkopf (32) einen ersten gebogenen Bereich (82) aufweist, der konkav in Richtung des Zylinderblocks (31) entlang einer Zylinderachse (C) des Zylinderblocks (31) gebogen ist, und einen zweiten gebogenen Bereich (83), der konvex in Richtung des Zylinderblocks (31) gebogen ist,
der erste gebogene Bereich (82) des Tumbleströmungskanals (80AH) im Zylinderkopf (32) vorgelagert zum zweiten gebogenen Bereich (83) bezüglich der Einlassströmungsrichtung (F) und nachgelagert einer Verbindungsfläche (32b) des Zylinderkopfs (32) angeordnet ist, mit der ein Einlassrohr (6) verbunden ist; und
der erste gebogene Bereich (82) einen Krümmungsradius (R1) hat, der kleiner als ein Krümmungsradius (R2) des zweiten gebogenen Bereichs (83) ist.

2. Lufteinlassstruktur für den Verbrennungsmotor nach Anspruch 1, wobei
der Abschnitt (81) im Zylinderkopf (32) eine Dicke (d1) hat, die von einer vorgelagerten Seite zu einer nachgelagerten Seite entlang der Einlassströmungsrichtung (F) variiert.

3. Lufteinlassstruktur für den Verbrennungsmotor nach Anspruch 1 oder 2, wobei
der Zylinderkopf (32) eine Verbindungsfläche (32b) aufweist, mit der ein Einlassrohr (6) für eine Einlassluft an einem vorgelagerten Ende der Einlassöffnung (42) im Zylinderkopf (32) verbunden ist, und der Einlasskanal (80H, 80P) senkrecht zur Verbindungsfläche (32b) in einem Gebiet der Verbindungsfläche (32b) ist.

4. Lufteinlassstruktur für den Verbrennungsmotor nach Anspruch 3, wobei
der Verbrennungsmotor (30) einen Verbrennungsmotor (30) aufweist, der an einem Fahrzeug (1) mit einer nach vorne nahezu horizontal geneigten Zylinderachse (C) angebracht ist;
das Einlassrohr (6) gebogen ist und bezüglich des Fahrzeugs von einem Verbindungsbereich (6b) davon, der mit dem Zylinderkopf (32) verbunden ist, nach hinten verläuft, und das Einlassrohr (6) einen darin definierten Einlasskanal (80P) hat, der durch den Abschnitt (81), der entlang der Einlassströmungsrichtung (F) angeordnet ist, in einen Tumbleströmungskanal (80AP) und einen Hauptströmungskanal (80BP) unterteilt ist; und
der Abschnitt (81) im Einlassrohr (6) eine Dicke (d2) hat, die von einer vorgelagerten Seite zu einer nachgelagerten Seite entlang der Einlassströmungsrichtung (F) variiert.

5. Lufteinlassstruktur für den Verbrennungsmotor nach Anspruch 4, wobei ein Isolationselement (61) zwischen dem Zylinderkopf (32) und dem Einlassrohr (6) angeordnet ist, wobei der Zylinderkopf (32), das Einlassrohr (6) und das Isolationselement (61) jeweilige Flansche (32c, 6c, 61c) haben, und das Einlassrohr (6) am Zylinderkopf (32) befestigt und damit verbunden ist, indem Elemente (65) befestigt werden, die in Gewindebereiche (32d, 6d, 6id) der Flansche eingeschraubt sind.

6. Lufteinlassstruktur für den Verbrennungsmotor nach Anspruch 1 oder 2, wobei
der Tumbleströmungskanal (80AH) im Zylinderkopf (32) eine Vielzahl von gebogenen Bereichen (37) aufweist, die unterschiedliche Krümmungen haben, die durch eine Innenwand (32e) des Zylinderblocks (31) definiert sind.

7. Lufteinlassstruktur für den Verbrennungsmotor nach Anspruch 1 oder 2, wobei
das nachgelagerte Ende (80Ab) des Tumbleströmungskanals (80AH) im Zylinderkopf (32) durch eine Kantenströmungskanalwand (84) definiert ist, die eine Kante hat, die in Richtung der Deckenfläche (32a) der Verbrennungskammer (36) ausgerichtet ist, und das nachgelagerte Ende (80Ab) des Tumbleströmungskanals in den Hauptströmungskanal (80BH) in der Einlassöffnung (42) geöffnet ist, sodass Einlassluft, die vom nachgelagerten Ende (80Ab) geführt wird, sich mit der Einlassluft verbindet, die vom Hauptströmungskanal (80 BH) in der Einlassöffnung (42) geführt wird.

## Revendications

1. Structure d'admission d'air pour un moteur à combustion interne (30) comportant une culasse (32) couplée à un bloc-cylindres (31) et ayant un passage d'admission (80H) défini en son sein, le passage d'admission (80H) logeant une cloison (81) disposée le long d'une direction d'écoulement d'admission (F) et étant divisé par la cloison (81) en un passage d'écoulement tourbillonnaire (80AH) et un passage d'écoulement principal (80BH), dans laquelle
la cloison (81) dans la culasse (32) a une extrémité aval (81b) incurvée en direction du bloc-cylindres (31), et le passage d'écoulement tourbillonnaire (80AH) a une extrémité aval (80Ab) orientée en direction d'une surface de plafond (32a) d'une chambre de combustion (36) du moteur à combustion interne (30) ; et
**caractérisée en ce que**
le passage d'écoulement tourbillonnaire (80AH) dans la culasse (32) comporte une première partie incurvée (82) qui est incurvée de façon concave en direction du bloc-cylindres (31) le long d'un axe de cylindre (C) du bloc-cylindres (31) et une deuxième partie incurvée (83) qui est incurvée de façon convexe en direction du bloc-cylindres (31),
la première partie incurvée (82) du passage d'écoulement tourbillonnaire (80AH) dans la culasse (32) est disposée en amont de la deuxième partie incurvée (83) par rapport à la direction d'écoulement d'admission (F) et en aval d'une surface de joint (32b) de la culasse (32) à laquelle un tuyau d'entrée (6) est raccordé ; et
la première partie incurvée (82) a un rayon (R1) de courbure qui est inférieur à un rayon (R2) de courbure de la deuxième partie incurvée (83).

2. Structure d'admission d'air pour le moteur à combustion interne selon la revendication 1, dans laquelle
la cloison (81) dans la culasse (32) a une épaisseur (d1) qui varie à partir d'un côté amont en direction d'un côté aval le long de la direction d'écoulement d'admission (F).

3. Structure d'admission d'air pour le moteur à combustion interne selon la revendication 1 ou 2, dans laquelle
la culasse (32) comporte une surface de joint (32b) à laquelle un tuyau d'entrée (6) pour un air d'admission est raccordé, au niveau d'une extrémité amont d'un orifice d'admission (42) dans la culasse (32) et le passage d'admission (80H, 80P) est perpendiculaire à la surface de joint (32b) au niveau d'une région de la surface de joint (32b).

4. Structure d'admission d'air pour le moteur à combustion interne selon la revendication 3, dans laquelle
le moteur à combustion interne (30) consiste en un moteur à combustion interne (30) monté sur un véhicule (1) avec l'axe de cylindre (C) incliné vers l'avant plus ou moins horizontalement ;
le tuyau d'entrée (6) est incurvé et s'étend vers l'arrière par rapport au véhicule à partir d'une partie de joint (6b) de celui-ci raccordée à la culasse (32), et le tuyau d'entrée (6) a un passage d'admission (80P) défini en son sein qui est divisé par la cloison (81) disposée le long de la direction d'écoulement d'admission (F) en un passage d'écoulement tourbillonnaire (80AP) et un passage d'écoulement principal (80BP) ; et
la cloison (81) dans le tuyau d'entrée (6) a une épaisseur (d2) qui varie à partir d'un côté amont en direction d'un côté aval le long de la direction d'écoulement d'admission( F).

5. Structure d'admission d'air pour le moteur à combustion interne selon la revendication 4, dans laquelle
un isolant (61) est interposé entre la culasse (32) et le tuyau d'entrée (6), la culasse (32), le tuyau d'entrée (6), et l'isolant (61) ont des brides respectives (32c, 6c, 61c), et le tuyau d'entrée (6) est fixé et joint à la culasse (32) par des organes de fixation (65) filetés dans des parties de filetage (32d, 6d, 61d) des brides.

6. Structure d'admission d'air pour le moteur à combustion interne selon la revendication 1 ou 2, dans laquelle
le passage d'écoulement tourbillonnaire (80AH) dans la culasse (32) comporte une pluralité de parties incurvées (37) présentant différentes courbures, définies par une paroi interne (32e) du bloc-cylindres (31).

7. Structure d'admission d'air pour le moteur à combustion interne selon la revendication 1 ou 2, dans laquelle
l'extrémité aval (80Ab) du passage d'écoulement tourbillonnaire (80AH) dans la culasse (32) est définie par une paroi de passage d'écoulement de bord (84) ayant un bord orienté en direction de la surface de plafond (32a) de la chambre de combustion (36), et l'extrémité aval (80Ab) du passage d'écoulement tourbillonnaire est ouverte dans le passage d'écoulement principal (80BH) dans l'orifice d'admission (42) de sorte qu'un air d'admission guidé par l'extrémité aval (80Ab) joint un air d'admission guidé par le passage d'écoulement principal (80BH) dans l'orifice d'admission (42).
